# EUROPEAN PATENT APPLICATION

(11) **EP 3 023 565 A1**
(43) Date of publication of application: **25.05.2016**
(21) Application number: 15195713.1
(22) Date of filing: 20.11.2015
(51) Int. Cl.: E05D 5/02, E05D 7/04, F16B 13/14, E04B 1/76, E05D 5/08

(54) **ANCHORING SYSTEM FOR ANCHORING WINDOW FRAMES TO THERMAL-INSULATION PANELS THAT COVER BUILDINGS**

(30) Priority: 20.11.2014 IT AN20140178
(71) Applicant: AKIFIX S.p.A. con Socio Unico, 60030 Monsano (IT)
(72) Inventor: MARINELLI, Andrea, 60030 MONSANO (IT)
(74) Representative: Manconi, Stefano

(57) **Abstract**

An anchoring system (100; 200) for anchoring a window frame to a thermal-insulation panel (2) that covers a building; the anchoring system (100; 200) comprises a hinge (4) fixed to the window frame and provided with a screw (40); an insert (1) adapted to be inserted and glued into a seat (20) obtained in the thermal-insulation panel (2) and covered by plaster (8); a threaded bar (3) partially screwed into a threaded hole (50) of the insert (1) and protruding outwards from the insert (1), so that it can be unscrewed and replaced with the screw (40) of the hinge.

## Description

The present patent application relates to an anchoring system for anchoring window frames to thermal-insulation panels that cover buildings.

In the building industry, systems are known, which are used to cover an external wall of a building, said system being called external wall insulation system (or EWIS). External wall insulation systems comprise insulated panels, which are fixed to the wall and covered with a layer of plaster.

It should be pointed out that insulated panels are usually made of polyurethane foam or other synthetic materials, which are not very hard and have thermal-insulating properties. Therefore, when dealing with external wall insulation systems, a problem arises, namely that of fixing to the wall support means used to support light loads, such as for example the hinges of the shutters of the windows. As a matter of fact, external wall insulation systems, which are made of thermal-insulation panels and plaster, cannot offer, unlike concrete and traditional bricks, a safe and resistant hold for the anchoring screws used to anchor said hinges.

To solve this problem, high-density polystyrene inserts are known, which are designed to be inserted and glued into seats made in the thermal-insulation panel, in order to be then covered by the surface plaster. The anchoring screws of the hinges are self-tapping screw, which are fixed to said inserts.

It should be pointed out that the insert has a density of 180 Kg/m³, whereas the thermal-insulation panel has a density of 80-100 Kg/m³. Therefore, the insert ensures a better hold of the anchoring screw.

However, inserts of the type described above show some drawbacks during the installation of the shutter. As a matter of fact, these inserts are hidden under the surface plaster of the external wall insulation system and, therefore, they cannot be seen by the operator who is trying to install the shutter. This makes it harder for operators to install shutters on a building covered with an external wall insulation system, as the operator himself can have a hard time identifying and targeting the inserts hidden under the plaster.

Furthermore, these inserts are scarcely resistant to the extraction of the anchoring screws and tend to easily break during the screwing of the self-tapping screws used to anchor and support the hinges of the shutters, thus jeopardizing the stability of the anchoring connecting the hinges to the thermal-insulation panel.

The object of the present invention is to eliminate the drawbacks of the prior art described above by providing an anchoring system for anchoring to thermal-insulation panels, which is reliable, safe, precise and does not create any problems or difficulties for the operator.

According to the present invention, this object is reached by means of the features set forth in independent claim 1.

Advantageous embodiments of the invention are described in the dependent claims.

The anchoring system according to the present invention is designed to anchor a window frame to a thermal-insulation panel that covers a building.

The anchoring system according to the present invention comprises:
- a hinge fixed to the window frame and provided with a screw;
- an insert adapted to be inserted and glued into a seat obtained in the thermal-insulation panel and covered by plaster applied on the thermal-insulation panel; said insert comprises a threaded hole having an inner thread;
- a threaded bar partially screwed into the threaded hole of the insert and protruding outwards from the insert, in such manner to prevent the plaster applied on the thermal-insulation panel from entering into the threaded hole of the insert.

The threaded bar externally protrudes from the plaster in such manner to be unscrewed from the threaded hole of the insert and in such manner to screw the screw of the hinge in the threaded hole of the insert.

The advantages of the anchoring system according to the present invention are evident: the threaded bars screwed into the inserts protrude outwards from the plaster, thus allowing operators dealing with the installation of the shutters to easily identify the inserts where the screws of the hinges of the shutters can be screwed.

Furthermore, this type of insert ensures a more stable and reliable anchoring, hence avoiding an accidental loosening of the anchoring screw.

In order to explain the invention more clearly, the description of the anchoring system according to the present invention goes on with reference to the accompanying drawings, which are used by mere way of non-limiting example, wherein:
Figure 1 is an exploded perspective view of a first embodiment of an anchoring system according to the present invention;
Figure 2 shows the insert of Figure 1 inserted into a seat obtained in a thermal-insulation panel;
Figure 3 is similar to Figure 2, but with the thermal-insulation panel having a layer of plaster that covers the insert of the anchoring system according to the present invention;
Figure 4 is an exploded perspective view of a second embodiment of an anchoring system according to the present invention.

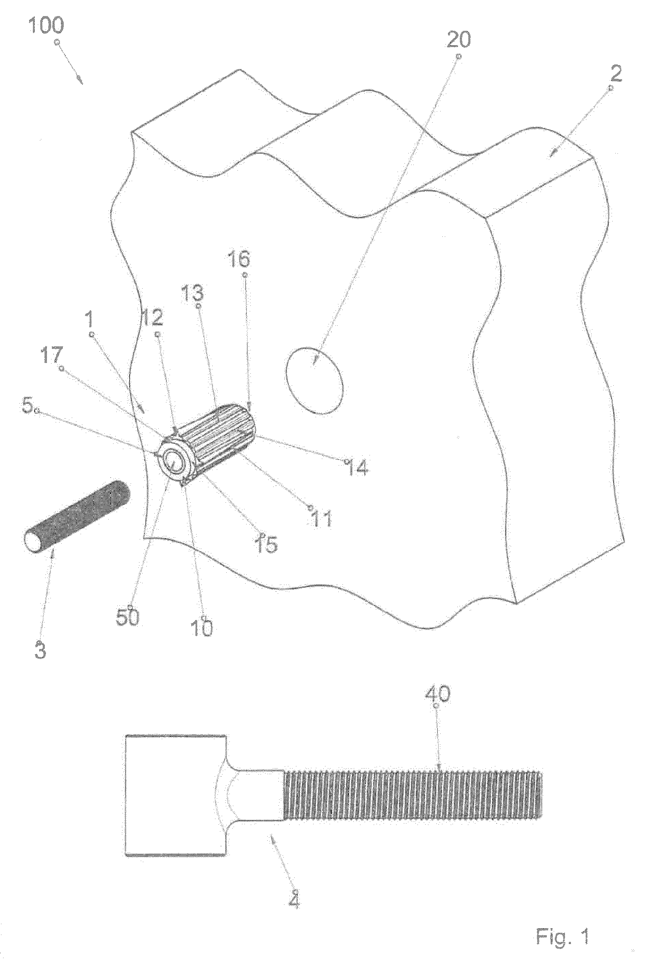

With reference to figure 1, number (100) indicates, as a whole, an anchoring system according to the present invention.

The anchoring system (100) is adapted to anchor a window frame to a thermal-insulation panel (2) used to cover a building. The anchoring system (100) comprises an insert (1). The insert (1) is adapted to be inserted and glued into a seat (20) obtained in the thermal-insulation panel (2). The insert (1) comprises a cylindrical shank (10), which is made of a plastic material and surrounds as well as supports a metal bush (5) wherein a threaded hole (50) is obtained. The cylindrical shank (10) of the insert (1) comprises a front face (15) and a rear face (16). The cylindrical shank (10) comprises an external wall (11) made of a plastic material.

The insert (1) comprises anti-rotational wings (12) that radially protrude outwards from the external wall (11) to prevent the rotation of the insert in the seat (20) of the thermal-insulation panel. The anti-rotational wings (12) are, for example, longitudinal wings with a height that decreases moving from the front face (15) towards the rear face (16) of the cylindrical shank (10).

The insert (1) comprises a plurality of grooves (13) and ribs (14) obtained on the external wall (11) to favor the gluing of the insert inside the seat (20) of the thermal-insulation panel.

The insert (1) comprises stop surfaces in undercut (17) obtained on the external wall (11) to create stagnation and setting areas of the adhesive that prevent the insert (1) from coming out of the seat (20) of the thermal-insulation panel (2).

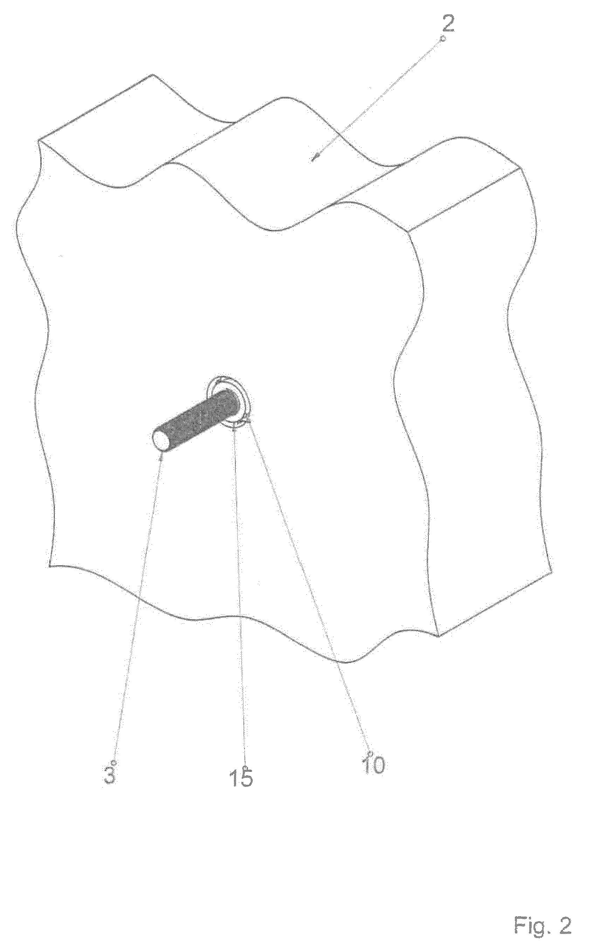

The anchoring system (100) comprises a threaded bar (3), which is screwed into the threaded hole (50) of the insert (1), so as to protrude outwards from the front face (15) of the cylindrical shank, as shown in Figure 2.

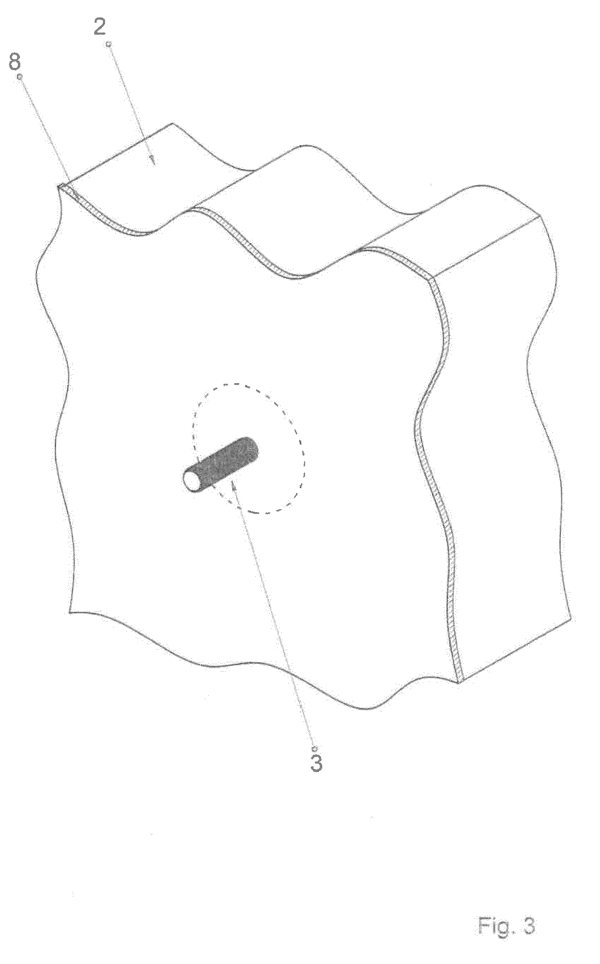

With reference to Figure 3, a layer of plaster (8) is applied on the thermal-insulation panel (2) after the insert (1) has been inserted into the seat (20) of the thermal-insulation panel (2). The layer of plaster (8) covers the front face (15) of the cylindrical shank (10) of the insert. On the other hand, the threaded bar (3) protrudes outwards from the layer of plaster (8), in such manner to prevent the plaster (8) applied on the thermal-insulation panel (2) from entering into the threaded hole (50) of the insert (2). In this way, the threaded bar (3) remains visible and is not covered by the plaster (8). Therefore, the threaded bar (3) can be unscrewed from the threaded hole (50) of the insert (1).

The anchoring system (100) comprises, furthermore, a hinge (4), which is adapted to support a window frame (not shown in the figures) in a rotary manner. The hinge (4) is provided with a screw (40), which is adapted to be screwed into the threaded hole (50) of the insert after the threaded bar (3) has been unscrewed and removed from the threaded hole (50) of the insert.

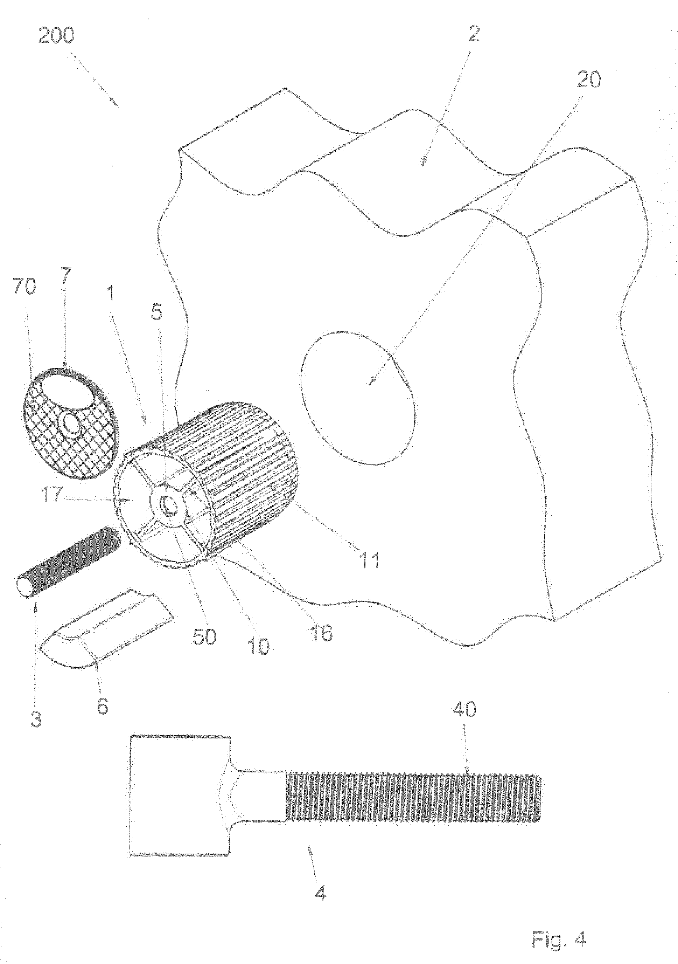

Figure 4 shows a second embodiment of the system according to the present invention, which is indicated, as a whole, with number (200).

Hereinafter, those elements that are the same as and correspond to the ones described above are indicated with the same reference numbers and are not described in detail.

The insert (1) of the anchoring system (200) has an external wall (11) that is spaced apart from said cylindrical shank (10) and connected to the cylindrical shank (10) by means of a plurality of radial partitions (16) in order to define a plurality of spaces (17). These spaces (17) advantageously house elements made of an insulation material (6), such as polystyrene foam.

In this case, the insert (1) comprises a cover (7) to cover said elements made of an insulation material (6) arranged inside the spaces (17). The cover (7) has an external surface (70) with a plurality of ribs in net configuration to favor the adhesion of the plaster (8) on the cover (7).

Below you can find a description of the method for anchoring a window frame to a thermal-insulation panel (2) of a building by means of the anchoring system (100; 200) described above.

The method comprises the following steps:
- making the seat (20) in the thermal-insulation panel (2);
- injecting adhesive into the seat (20) of the thermal-insulation panel (2);
- inserting the insert (1) into the seat (20), so that the threaded bar (3) screwed into the threaded hole (50) of the insert (1) protrudes outwards from the seat (20) of the thermal-insulation panel;
- applying a plaster layer (8) on the thermal-insulation panel (2) in such manner to cover the insert (1) and leave a portion of the threaded bar (3) uncovered;
- unscrewing the threaded bar (3) from the threaded hole (50) of the insert (1);
- screwing the screw (40) of the hinge (4) of a shutter into the threaded hole (50) of the insert (1).

## Claims

1. Anchoring system (100; 200) for anchoring a window frame to a thermal-insulation panel (2) that covers a building; said anchoring system (100; 200) comprising:
- a hinge (4) fixed to the window frame and provided with a screw (40);
- an insert (1) adapted to be inserted and glued into a seat (20) obtained in the thermal-insulation panel (2) and covered by plaster (8) applied on the thermal-insulation panel (2); said insert (1) comprising a threaded hole (50);
- a threaded bar (3) partially screwed into the threaded hole (50) of the insert (1) and protruding outwards from the insert (1), in such manner to prevent the plaster (8) applied on the thermal-insulation panel (2) from entering into the threaded hole (50) of the insert, said threaded bar (3) externally protruding from the plaster (8) in such manner to be unscrewed from the threaded hole (50) of the insert and in such manner to screw said screw (40) of the hinge in the threaded hole (50) of the insert.

2. The anchoring system (100; 200) of claim 1, wherein said insert (1) comprises a metal bush (5) wherein the threaded hole (50) is obtained.

3. The anchoring system (100; 200) of claim 2, wherein said insert (1) comprises a cylindrical shank (10) made of plastic material that surrounds and supports said metal bush (5).

4. The fixing system (100; 200) of any one of the preceding claims, wherein said insert (1) comprises an external wall (11) made of plastic material.

5. The anchoring system (100; 200) of claim 4, wherein said insert (1) comprises anti-rotational wings (12) that radially protrude outwards from the external wall (11) to prevent the rotation of the insert in the seat (20) of the thermal-insulation panel (2).

6. The anchoring system (100; 200) of claim 4 or 5, wherein said insert (1) comprises a plurality of grooves (13) and ribs (14) obtained on the external wall (11) to favor the gluing of the insert inside the seat of the thermal-insulation panel.

7. The anchoring system (100; 200) of any one of claims 4 to 6, wherein said insert (1) comprises stop surfaces in undercut (17) obtained on the external wall (11) to create stagnation and setting areas of the adhesive that prevent the insert (1) from coming out of the seat (20) of the thermal-insulation panel (2).

8. The anchoring system (100) of any one of claims 4 to 7, when depending on claim 3, wherein said external wall (11) is obtained on said cylindrical shank (10).

9. The anchoring system (200) of any one of claims 4 to 7, when depending on claim 3, wherein said external wall (11) is spaced from said cylindrical shank (10) and connected to the cylindrical shank (10) by means of a plurality of radial partitions (16) in order to define a plurality of spaces (17).

10. The anchoring system (200) of claim 9, wherein said insert (1) comprises elements made of insulation material (6), such as polystyrene, inserted into said spaces (17).

11. The anchoring system (200) of claim 10, wherein said insert (1) comprises a cover (7) to cover said elements made of insulation material (6), said cover (7) having an external surface (70) with a plurality of ribs in net configuration to favor the adhesion of the plaster (8) on the cover (7).

12. Method to anchor a window frame to a thermal-insulation panel (2) that covers a building; said method comprising the following steps:
- making a seat (20) in the thermal-insulation panel (2);
- injecting adhesive into the seat (20) of the thermal-insulation panel (2);
- inserting an insert (1), with a threaded bar (3) screwed into a threaded hole (50) of the insert (1), inside the seat (20);
- applying a plaster layer (8) on the thermal-insulation panel (2) in such manner to cover the insert (1) and leave a portion of the threaded bar (3) uncovered;
- unscrewing the threaded bar (3) from the threaded hole (50) of the insert (1);
- screwing a screw (40) of a hinge (4) of a shutter into the threaded hole (50) of the insert (1).
